Europäisches Patentamt

**European Patent Office**

Office européen des brevets

(11) Publication number: **0 219 155**
A2

# EUROPEAN PATENT APPLICATION

(21) Application number: **86201634.2**

(22) Date of filing: **23.09.86**

(51) Int. Cl.⁴: **F 16 L 59/02**

(30) Priority: **30.09.85 NL 8502675**

(43) Date of publication of application:
**22.04.87 Bulletin 87/17**

(84) Designated Contracting States:
**BE CH DE GB LI NL**

(71) Applicant: **Kooy, Albertus**
**No. 14 Lorentzlaan**
**NL-7535 CK Enschede(NL)**

(72) Inventor: **Kooy, Albertus**
**No. 14 Lorentzlaan**
**NL-7535 CK Enschede(NL)**

(74) Representative: **Schumann, Bernard Herman**
**Johan et al,**
**OCTROOIBUREAU ARNOLD & SIEDSMA Sweelinckplein**
**1**
**NL-2517 GK The Hague(NL)**

(54) Insulating jacket.

(57) An insulating jacket for a pipe, having an axial cylindrical passage for accommodating the pipe, which insulating jacket is made of a generally form-retaining, hard insulating material, and comprises two complementary insulating jacket parts, which is characterized in that one of the insulating jacket parts has a basically U-shaped cross-section, and that the distance $a$ between the contact surfaces of the two insulation parts at the level of the passage is equal to at least the external diameter of the pipe.

FIG.1

# INSULATING JACKET

This invention relates to an insulating jacket for a pipe, having an axial cylindrical passage for accommodating the pipe, which insulating jacket is made of a generally form-retaining, hard insulating material, and comprises two complementary insulating jacket parts.

Various kinds of insulating material can be used for the insulation of a pipe.

When a soft, pliable insulating material such as a foam is used, the insulating jacket is provided with a longitudinal slit. This pliable insulating jacket is fitted around a pipe by moving the flexible parts adjacent to the slit away from each other and then bringing the pipe into the resulting groove, after which the flexible and elastic parts recover their original form, so closing the jacket.

When a generally form-retaining , hard insulating jacket such as polyurethane, polystyrene or phenolic resin is used,    . the insulating jacket is constructed of two identical insulating shells. The two shells can be joined together, possibly with the aid of coupling means such as wires.

This invention relates to an insulating jacket for a pipe which is fabricated from such a generally form-retaining, hard insulating material. A disadvantage of using this known insulating jacket is that two shells are worked with, and during fitting of the insulating jacket at least one of the two insulating shells has to be held fast, thus increasing the assembly time. Moreover, the two insulating shells have to be fastened to each other with the aid of fastening means, such as adhesive tape, metal wire or glue.

This invention has for its aim to improve the known insulating jacket for a pipe in such a manner that the above-described disadvantages are largely avoided. This is achieved, in accordance with the invention, through one of the insulating jacket parts having a basically U-shaped cross-section, and through distance $\underline{a}$ between the contact surfaces of the two insulation parts at the level of the passage being equal to at least the external diameter of the pipe. In this way, the U-shaped insulating jacket part can be fitted onto the pipe, and the complementary part is then slid or pushed into the remaining groove. In the case of horizontal pipes, the U-shaped insulating jacket part rests hanging on the pipe.

If distance $\underline{a}$ diverges radially towards the central passage, the pipe is, on the one hand, gripped by the U-shaped insulating jacket part, so that the U-shaped part can not accidentally become released during assembly, particularly in the case of vertical pipes. After assembly, on the other hand, the other insulating jacket part is secured against releasing from the longitudinal groove in which it is accommodated after assembly; moreover, a separate fastening means in the form of adhesive tape or whatever can be omitted.

In another preferred embodiment, distance $\underline{a}$ varies in such a way that it converges for a short distance $\underline{b}$ from the jacket exterior, and then diverges. In this way there arise self-locating lateral surfaces on the legs of the U-shaped insulating jacket part, so that assembly can take place more quickly and with less damage.

The insulating jacket according to the invention will be clarified, by way of example, by reference to three embodiments:

In the drawings:

Figures 1 and 3 are each, respectively for different embodiments, a perspective view of an assembled and a disassembled insulating jacket according to the invention;

Figures 2 and 4 are each a cross-section, along lines II-II and IV-IV respectively;

Figure 5 is an exploded section, corresponding to figures 1 and 2, of a third embodiment of the insulating jacket according to the invention.

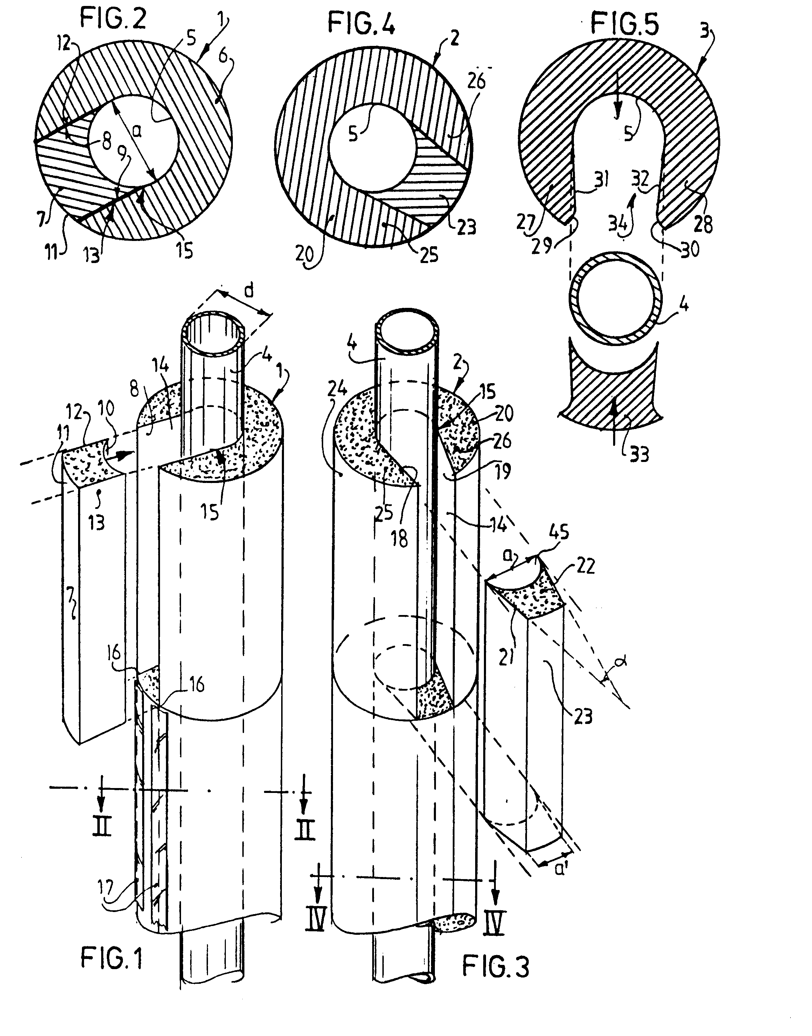

Figures 1 and 2 show a first embodiment of insulating jacket 1 according to the invention. Insulating jacket 1 is basically shaped as a hollow cylinder, and is provided with axial cylindrical passage 5 intended for the accommodation of pipe 4. Insulating jacket 1 consists of two complementary insulation jacket parts 6 and 7. Insulation jacket part 6 is basically U-shaped in cross-section. Surfaces 8 and 9 are mutually parallel and are also plane-tangential to passage 5.

Oblong insulating jacket part 7 has concave surface 10, which forms part of passage 5, and convex surface 11. Surfaces 10 and 11 are connected by mutually parallel surfaces 12 and 13, which in the assembled state lie in contact with surfaces 8 and 9 respectively of the one insulating jacket part 6.

The only critical requirement is that the pipe to be insulated, 4, can reach passage 5 via groove 14. Thus only distance $a$ between contact surfaces 8/12 and 9/13 at the level of passage 5 at point 15 must at least equal external diameter $d$ of pipe 4.

In order to connect insulation jacket parts 6 and 7 firmly together, adhesive strip 17 can be applied over longitudinal seam 16.

In the case of insulating jacket 2, shown in figures 2 and 4, surfaces 18 and 19 of the one insulating jacket part 20 are not parallel, but diverge in the direction of pipe 4. Surfaces 21 and 22 of complementary oblong insulating jacket part 23 diverge in the same direction and at the same angle. Thus distance $a'$ at the level of external surface 24 of the jacket is less than the distance at the level of point 15. Nevertheless, pipe 4 can be brought into passage 5 via groove 14 because the principally hard, rigid insulation material is sufficiently deformable at the level of the ends of legs 25 and 26 of insulating jacket part 20 to allow pipe 4 to pass. It will be clear that angle of divergence $\alpha$ is chosen dependently on the deformability of legs 25 and 26.

Since insulating jacket part 23 is enclosed between legs 25 and 26 of insulating jacket part 20, fastening means in a form such as adhesive strip 17 can be omitted.

Figure 5 shows, in exploded form, a third embodiment of insulating jacket 3 according to the invention. In this case legs 27 and 28 are provided with, successively in the direction of passage 5, mutually converging surfaces 29 and 30 and then diverging surfaces 31 and 32. Complementary insulating jacket part 33 is provided with surfaces of the same kind. Surfaces 29 and 30 function as self-locating surfaces, due to which insulating jacket part 33 can be brought into groove 34 more easily and with less damage.

As generally form-retaining and generally hard insulating materials, there can for instance be used polyurethane, polystyrene or phenolic resins. The assembled jacket can possibly be provided with a protective aluminium skin (for outdoor use) or with a foil (for indoors).

Part 33 can possibly be fastened to and between legs 27, 28 with aid of a tongue and groove system. In this way a continuous running gap between part 33 and an adjacent leg 27 or 28 can be avoided.

Claims

1. An insulating jacket for a pipe, having an axial cylindrical passage for accomodating the pipe, which insulating jacket is made of a generally form-retaining, hard insulating material, and comprises two complementary insulating jacket parts, characterized in that one of the insulating jacket parts has a basically U-shaped cross-section, and that distance $a$ between the contact surfaces of the two insulation parts at the level of the passage is equal to at least the external diamter of the pipe.

2. An insulating jacket as claimed in claim 1, characterized in that distance $a$ diverges radially towards the passage.

3. An insulating jacket as claimed in claim 1 or 2, characterized in that distance $a$ converges for a small distance $b$ from the jacket outer surface and then diverges.

0219155

-1/1-

FIG.2

FIG.4

FIG.5

FIG.1

FIG.3